# FASCICULE DE BREVET EUROPEEN

(11) **EP 1 387 776 B1**
(45) Date de publication et mention de la délivrance du brevet: **10.11.2004**
(21) Numéro de dépôt: 02735542.9
(22) Date de dépôt: 16.05.2002
(51) Int. Cl.: B60K 17/10, F16H 61/40, F16H 39/00

(54) **CIRCUIT DE TRANSMISSION HYDROSTATIQUE D'ENGIN**
SCHALTUNG FÜR HYDROSTATISCHES FAHRZEUGGETRIEBE
VEHICLE HYDROSTATIC TRANSMISSION CIRCUIT

(30) Priorité: 17.05.2001 FR 0106505
(43) Date de publication de la demande: 11.02.2004
(73) Titulaire: POCLAIN HYDRAULICS INDUSTRIE, 60411 Verberie (FR)
(72) Inventeur: ROUILLARD, Jean-Marie, F-60610 LA CROIX SAINT OUEN (FR); RAISIN, Jean-Philippe, F-60800 CREPY-EN-VALOIS (FR)
(74) Mandataire: Intès, Didier Gérard André
(86) Numéro de dépôt international: PCT/FR2002/001648
(87) Numéro de publication internationale: WO 2002/092374

(56) Documents cités:
- EP-A- 0 505 254
- DE-A- 10 017 901

## Description

La présente invention concerne un circuit de transmission hydrostatique pour un engin ayant au moins deux organes de déplacement entraînés par au moins un moteur hydraulique ayant une conduite principale d'alimentation et une conduite principale d'échappement, le circuit comprenant une source de fluide sous pression reliée audit moteur par la conduite principale d'alimentation et des moyens de contrôle du patinage d'au moins un organe de déplacement qui comprennent une valve de contrôle du patinage, disposée sur l'une desdites conduites principales et comportant une restriction de section variable, des moyens de détection d'une situation de patinage dudit organe de déplacement et des moyens de commande aptes à régler la section de ladite restriction en fonction de la situation détectée.

Le document EP-A-0 505 254 montre un circuit de ce type qui, dans l'exemple représenté, comprend une pompe réversible alimentant quatre moteurs attelés chacun à une roue. Des capteurs de vitesse sont associés à chaque roue et les vitesses mesurées sont transmises à un dispositif de traitement qui commande des restrictions disposées au nombre d'une par moteur, sur l'une des conduites principales du moteur. Lorsqu'une survitesse de l'un des moteurs qui témoigne d'une situation de patinage est détectée, la section de passage de la restriction disposée sur la conduite principale de ce moteur est réduite pour occasionner une perte de charge et réduire la vitesse de ce moteur.

En général, le système de contrôle du patinage est utile dans des conditions de circulation difficiles, en particulier lorsque l'engin se déplace en terrain difficile et qu'un patinage d'une ou plusieurs roues est susceptible de se produire. En revanche, lorsque l'engin se déplace sans risque de patinage, par exemple sur route, le système de contrôle du patinage est désactivé. Les sections des restrictions sont maximales, de telle sorte que le débit de fluide dans les conduites principales est le plus important possible pour permettre des vitesses élevées.

La présente invention s'applique en particulier à la transmission hydrostatique d'engins comportant un ou plusieurs moteurs de grandes cylindrées, notamment à des compacteurs dont la bille (rouleau) avant est entraînée par un moteur hydraulique ayant une grande cylindrée, par exemple 5 à 10 I, tandis que les roues arrière sont entraînées par un ou deux moteurs hydrauliques, ou bien encore à des engins pulvérisateurs ayant plusieurs moteurs à plusieurs cylindrées actives de fonctionnement, dont le rapport de la grande cylindrée à la petite cylindrée est grand, par exemple de l'ordre de 5.

De plus en plus, on cherche à mettre au point des transmissions hydrostatiques permettant des entraînements à vitesse élevée et/ou délivrant des couples importants. Il en résulte une augmentation importante du débit de fluide qui alimente les moteurs hydrauliques et s'en échappe, par rapport aux moteurs qui étaient utilisés dans le passé, pour lesquels les vitesses et les couples étaient moins élevées.

Par exemple, pour l'application aux compacteurs évoquée ci-dessus, on utilise pour l'entraînement de la bille avant un moteur hydraulique à pistons radiaux du type dit à basse vitesse et à fort couple, ayant une cylindrée de 5 à 10 I, délivrant un couple maximal de l'ordre de 30 000 à 60 000 m.N, et pour lequel le débit dans les conduites principales est de l'ordre de 250 à 500 l/mn, lorsque le moteur tourne à 50 tr/mn.

Une restriction est un passage de fluide de section calibrée. Lorsque la restriction est réglable, la section de passage du fluide peut être modifiée mais, même lorsque la restriction est ouverte au maximum, la section de passage maximale qui en résulte est inférieure à la section courante des conduites de circulation de fluide dans les portions de ces conduites dépourvues de toute restriction. Il en résulte que, même lorsque la restriction est ouverte au maximum, une perte de charge, c'est-à-dire un gradient de pression, se produit au travers de cette restriction.

Lorsque les exigences en matière de vitesse et de couple délivré par le moteur étaient moins importantes, cette perte de charge pouvait être négligée. Toutefois, pour une section donnée, la pression de fluide est proportionnelle au carré du débit ce qui signifie que lorsque le débit de fluide augmente, la perte de charge à travers une restriction augmente proportionnellement au carré de l'augmentation du débit. Pour des débits importants, la perte de puissance occasionnée par la perte de charge constatée au travers d'une restriction devient importante et l'on constate un échauffement des circuits.

L'invention a pour but de remédier aux inconvénients précités en proposant un circuit de transmission hydrostatique doté de moyens de contrôle du patinage qui permettent un contrôle du patinage fiable lorsqu'ils sont activés et qui, lorsqu'ils sont désactivés, limitent les pertes de charge précitées.

Ce but est atteint grâce au fait que les moyens de contrôle du patinage dudit organe de déplacement comprennent, en outre, une valve supplémentaire disposée en parallèle de la valve de contrôle du patinage, sur une dérivation de la conduite principale sur laquelle cette dernière est disposée, ladite valve supplémentaire ayant une première position extrême dans laquelle sa section de passage est maximale et une deuxième position extrême dans laquelle sa section de passage est minimale et étant susceptible d'être commandée entre ses positions extrêmes par les moyens de commande.

Ainsi, avec l'invention, la valve de contrôle du patinage et la valve supplémentaire sont disposées sur la conduite principale considérée. Lorsque le système de contrôle du patinage est désactivé, les deux valves sont commandées de manière à offrir des sections de passage maximales. Le débit de fluide se répartit entre les deux branches formées en dérivation sur la conduite principale.

Par exemple, les sections de passage maximales des deux valves sont égales et le débit de fluide se répartit pour moitié entre ces deux branches. Dans ce cas, le gradient de pression dû à la présence des deux valves est égal au quart du gradient de pression qui serait observé dans un système conforme à l'art antérieur comprenant seulement la valve de contrôle du patinage, sans la valve supplémentaire disposée en parallèle.

Avec l'invention, il n'est pas nécessaire de surdimensionner les composants hydrauliques. Ceci présente un avantage du point de vue de la fiabilité des systèmes anti-patinage. En effet, si l'on choisissait de mettre en place une valve de contrôle du patinage ayant une section maximale largement augmentée par rapport aux valves classiques, le temps de réponse du système anti-patinage, c'est-à-dire le temps nécessaire à une diminution suffisante de la section de passage du fluide par une commande de cette valve en réponse à la détection d'une situation de patinage serait augmenté. En effet, ou bien un organe mobile (tiroir de la valve) devra être déplacé sur une amplitude plus grande que dans les valves connues, ou bien l'organe mobile devra être lui-même surdimensionné, et son déplacement sera alors plus lent.

Selon une première variante de réalisation avantageuse, la valve supplémentaire est une valve à deux positions et les moyens de commande sont aptes à recevoir une information d'activation ou de désactivation du contrôle du patinage et sont aptes à placer la valve supplémentaire dans sa première position extrême en situation de désactivation du contrôle du patinage et dans sa deuxième position extrême en situation d'activation du contrôle du patinage.

Dans ce cas, la valve supplémentaire offre toujours la section de passage minimale (celle-ci pouvant être une section nulle) en situation d'activation du contrôle du patinage de sorte que, lorsqu'une situation de patinage est détectée, par exemple par un détecteur mesurant une survitesse d'un organe de déplacement, seule la valve de contrôle du patinage doit être commandée de manière classique.

Le temps de réponse est alors exactement le même que pour un système ne comprenant pas la valve supplémentaire disposée sur la dérivation. Toutefois, l'invention permet, en situation de désactivation du contrôle du patinage, de diminuer les pertes de charge comme indiqué précédemment.

Selon une deuxième variante avantageuse, la valve supplémentaire comporte une restriction de section variable, et les moyens de commande sont aptes à régler la section de cette restriction en fonction de la situation de patinage détectée par les moyens de détection.

Dans cette variante, la valve supplémentaire est également utilisée pour permettre un contrôle du patinage. En effet, lorsqu'une situation de patinage est détectée, la valve de contrôle du patinage et également la valve supplémentaire sont toutes deux commandées pour offrir la section de passage optimale. L'intérêt de cette variante réside dans le fait que la gamme de sections disponible est largement plus étendue en utilisant deux valves plutôt qu'une seule valve.

Dans ce cas, avantageusement, le circuit comporte des moyens pour mesurer la vitesse de translation de l'engin et, tant que la vitesse est inférieure à une vitesse donnée, donc dans le cas de faibles débits, les moyens de commande maintiennent la valve supplémentaire dans sa deuxième position extrême et règlent la section de la restriction de la valve de contrôle du patinage en fonction de la situation de patinage détectée, ce qui permet un réglage fin du débit, tandis que, lorsque la vitesse est supérieure à ladite vitesse donnée, donc pour des débits de fluide plus importants, les moyens de commande règlent les sections des restrictions de la valve de contrôle du patinage et de la valve supplémentaire en fonction de la situation de patinage détectée.

Ainsi, au-dessus du seuil de vitesse déterminé par la vitesse donnée, le contrôle du patinage est réalisé en réglant la section de la valve du contrôle de patinage et celle de la valve supplémentaire et, en l'absence de patinage, la perte de charge due à la présence des moyens de contrôle du patinage est faible puisque les deux valves sont ouvertes. Au-dessous de ce seuil, seule la valve de contrôle du patinage doit être commandée.

Avantageusement, les moyens de commande sont aptes à recevoir une information d'activation ou de désactivation du contrôle du patinage et sont aptes, dans le cas d'une activation du contrôle du patinage, à placer la valve de contrôle du patinage dans une situation d'attente dans laquelle la section de la restriction de ladite valve est inférieure à la section maximale de ladite restriction, mais supérieure à sa section minimale.

Lorsque le contrôle du patinage est désactivé, comme indiqué précédemment, les restrictions de la valve de contrôle du patinage et de la valve supplémentaire sont toutes deux réglées de manière à offrir les sections de passage maximales. En cas d'activation du contrôle du patinage, au moins la valve de contrôle du patinage est placée en situation d'attente. Dans cette situation, les sections de passage ne sont pas maximales mais, compte tenu du fait que l'anti-patinage est en général activé à des vitesses relativement faibles, les pertes de charge qui en résultent sont généralement peu importantes. En revanche, le choix de la position d'attente permet de diminuer le temps de réponse de la ou des valves placeé(s) en situation d'attente lorsqu'un patinage est détecté, puisque les courses restant à parcourir par les organes de réglage des sections de passage pour diminuer suffisamment ces sections sont évidemment moins importantes que celles qui devraient être parcourues si les valves offraient initialement leurs sections de passage maximales.

Selon un mode de réalisation avantageux, la valve de contrôle du patinage comprend un tiroir mobile en translation dans un alésage relié, en deux zones distinctes, à un premier conduit raccordé à une conduite principale du moteur et à un deuxième conduit raccordé à une conduite d'alimentation en fluide provenant de la source de fluide sous pression ou à une conduite d'évacuation de fluide, ladite valve présente un conduit de communication, sur lequel est disposée la restriction de ladite valve et qui est apte à raccorder lesdits premier et deuxième conduits selon une section de passage variable en fonction de la position du tiroir dans l'alésage et ladite valve comporte, en outre, un conduit anti-cavitation, qui est raccordé, d'une part, audit premier conduit et, d'autre part, à une chambre de commande du déplacement du tiroir, elle-même susceptible d'être reliée à une source auxiliaire de fluide et qui comporte un clapet anti-retour apte à permettre seulement la circulation de fluide dans le sens allant de ladite chambre de commande au premier conduit.

On profite ainsi du fait que la valve de contrôle du patinage est disposée sur une conduite principale du moteur pour doter cette valve d'une fonction supplémentaire qui est celle d'éviter la cavitation dans ladite conduite.

Avantageusement, la valve de contrôle du patinage et la valve supplémentaire sont disposées dans un même bloc, qui forme un composant hydraulique et qui comporte un corps présentant au moins deux orifices destinés à être reliés à une conduite principale, respectivement en amont et en aval de l'ensemble formé par la valve de contrôle du patinage et par la valve supplémentaire.

Dans ce cas, la dérivation formant les deux branches parallèles de la conduite principale sur lesquelles sont disposées la valve de contrôle du patinage et la valve supplémentaire est au moins partiellement formée directement dans le bloc qui contient ces deux valves. Ce bloc est monté comme un seul composant hydraulique, ce qui facilite bien évidement les opérations de montage et également les opérations de maintenance.

Avantageusement, au moins une soupape destinée à limiter la pression dans la conduite principale à laquelle sont destinés à être reliés lesdits orifices du corps du composant hydraulique précité est disposée dans ce corps.

Dans ce cas, on profite du fait que le bloc dans lequel sont disposées la valve de contrôle du patinage et la valve supplémentaire est raccordé à l'une des conduites principales du moteur pour doter ce bloc d'une fonction connue en soi de limiteur de pression, servant à éviter une pression excessive dans le moteur.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 montre un circuit conforme à l'invention selon une première variante ;
- la figure 2 montre un composant hydraulique incorporant la valve de contrôle du patinage et la valve supplémentaire selon cette première variante ;
- la figure 3 montre un circuit conforme à l'invention selon une deuxième variante ;
- la figure 4 montre un composant hydraulique incorporant la valve de contrôle du patinage et la valve supplémentaire selon cette deuxième variante ; et
- la figure 5 montre un circuit conforme à l'invention selon une troisième variante.

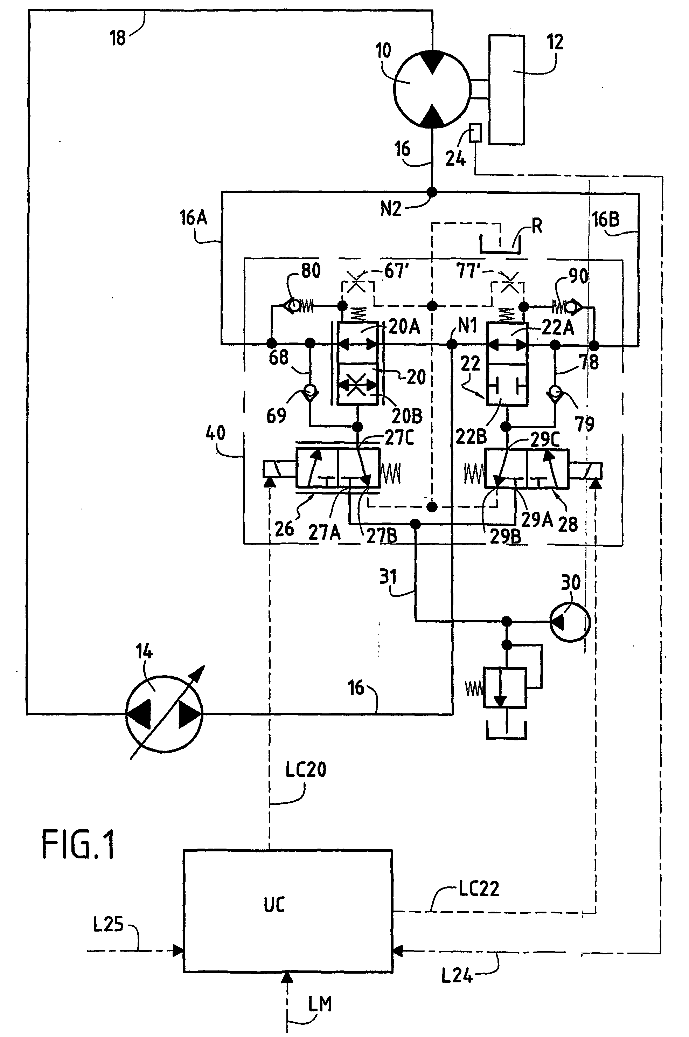

Le circuit de la figure 1 sert à l'alimentation en fluide d'un moteur hydraulique 10 auquel est attelé un organe de déplacement 12 d'un véhicule. Bien entendu, le véhicule comporte plusieurs organes de déplacement tels que des roues. Pour simplifier, seul l'un d'entre eux est représenté sur la figure 1. En réalité, au moins deux organes de déplacement, par exemple les deux roues avant ou les deux roues arrière, sont entraînés par deux moteurs hydrauliques différents, alimentés tous deux par la même pompe hydraulique 14 ou par deux pompes distinctes. Par exemple, le véhicule peut être un compacteur dont la bille avant est entraînée par un moteur hydraulique et dont les deux roues arrière sont entraînées par un ou deux moteurs, de préférence un ou deux moteurs hydrauliques à pistons radiaux. Au moins l'un de ces organes de déplacement et, de préférence, au moins deux organes de déplacement, sont associés à des moyens de contrôle du patinage. Par exemple, du point de vue de la disposition des moteurs et de leur alimentation par la pompe, le circuit peut être analogue à celui du document EP-A-0 505 254.

Dans l'exemple représenté, le circuit est un circuit fermé et le moteur 10 comporte deux conduites principales, 16 et 18 qui, selon son sens de fonctionnement, servent à l'alimentation ou à l'échappement et qui sont reliées aux deux orifices de la pompe 14. L'invention s'applique également aux circuits ouverts, c'est-à-dire que la source de fluide constituée par la pompe est reliée au moteur au moins par la conduite principale d'alimentation, tandis que la conduite principale d'échappement du moteur peut être raccordée à un réservoir sans pression.

Les moyens de contrôle du patinage comprennent un système de valve qui est disposé sur l'une des conduites principales, en l'espèce la conduite 16. Cette dernière présente une voie de dérivation et, à partir d'un noeud N1 situé entre la pompe 14 et le moteur, elle se dédouble en deux tronçons de conduites parallèles ou branches parallèles 16A et 16B, qui sont raccordées au moteur, à l'alimentation ou à l'échappement, selon que la conduite 16 sert à l'alimentation ou à l'échappement. Dans l'exemple représenté, les deux tronçons de conduite se réunissent au noeud N2 avant d'être reliés au même orifice du moteur.

Les moyens de contrôle du patinage de l'organe de déplacement 12 comprennent une valve de contrôle du patinage 20 qui est disposée sur le tronçon 16A et une valve supplémentaire 22 qui est disposée sur le tronçon 16B.

La valve de contrôle du patinage est une valve progressive apte, dans sa position extrême 20A, à offrir une section de passage maximale et, dans sa position extrême opposée 20B, à offrir une section de passage minimale. Lorsque la valve 20 est commandée, la section de passage varie progressivement entre ces deux extrêmes.

La valve supplémentaire 22 présente une première position extrême 22A dans laquelle sa section de passage est maximale et une deuxième position extrême 22B dans laquelle sa section de passage est minimale.

Dans la variante de la figure 1, la valve 22 présente seulement les deux positions précitées et, dans sa deuxième position extrême 22B, sa section de passage est nulle.

Les moyens de contrôle du patinage comportent, de manière connue en soi, des moyens de détection d'une situation de patinage de l'organe de déplacement 12. Par exemple, un capteur de vitesse 24 est prévu au voisinage de l'arbre de sortie du moteur 10. L'information mesurée par ce capteur de vitesse est transmise par une ligne de transmission L24 à une unité de contrôle UC, comprenant de préférence un microprocesseur. Cette unité analyse la donnée transmise par la ligne L24 et la compare avec des données de référence, telles qu'une vitesse ou un débit mesuré(e) par ailleurs afin de vérifier si elle témoigne d'une situation de patinage, auquel cas la vitesse de sortie du moteur 10 doit être diminuée, ce qui nécessite de réduire la section de passage du fluide dans les valves 20 et 22 comme il sera indiqué ci-après. Les données de référence indiquées plus haut constituent des consignes instantanées pour l'unité de contrôle UC.

La situation de patinage peut être détectée en captant la vitesse de sortie du moteur ou le débit dans l'une de ses conduites principales, voire même en mesurant une variation de pression entre différentes conduites du circuit.

L'engin comprenant plusieurs organes de déplacement, l'unité UC reçoit également des données analogues relatives à d'autres organes de déplacement, par une ou plusieurs lignes L25.

L'unité de contrôle UC peut commander la variation de section de la restriction de la valve 20 entre celles qu'elle présente dans ses deux positions extrêmes par une ligne de commande LC20 et peut également commander le passage de la valve 22 entre ses deux positions extrêmes par une ligne de commande LC22. En réalité, les valves 20 et 22 sont commandées par une pression de fluide, et les lignes LC20 et LC22 commandent directement des électrovalves, respectivement une électrovalve 26 associée à la valve 20 et une électrovalve 28 associée à la valve 22. Ces électrovalves comportent trois voies, à savoir une première voie, respectivement 27A et 29A, qui est raccordée à une conduite de gavage 31 alimentée par une pompe de gavage 30, une deuxième voie, respectivement 27B et 29B, qui est raccordée à un réservoir sans pression R et une troisième voie, respectivement 27C et 29C, qui est raccordée à une chambre de commande des valves 20, respectivement 22. Selon leur position, les électrovalves 26 et 28 font communiquer leurs troisièmes voies respectives, 27C et 29C, avec la conduite de gavage 31 ou bien avec le réservoir sans pression R.

Par une ligne LM, l'unité de contrôle UC peut recevoir une information consistant à activer ou à désactiver le système de contrôle du patinage. Par exemple, si le moteur comporte plusieurs cylindrées actives de fonctionnement, on peut concevoir que le système soit automatiquement placé en situation de désactivation de contrôle du patinage lorsque le moteur est en petite cylindrée, pour que l'engin circule à grande vitesse.

Lorsque le contrôle du patinage est désactivé, les valves 20 et 22 sont toutes deux placées dans leurs premières positions respectives, dans lesquelles les sections de passage dans les tronçons de conduite 16A et 16B sont maximales.

Dans la variante de la figure 1, le passage en mode d'activation du contrôle du patinage conduit l'unité de contrôle UC à placer la valve 22 dans sa deuxième position extrême 22B. Ainsi, si un patinage est détecté, il sera contrôlé en faisant seulement varier la section de passage du fluide dans la valve 20.

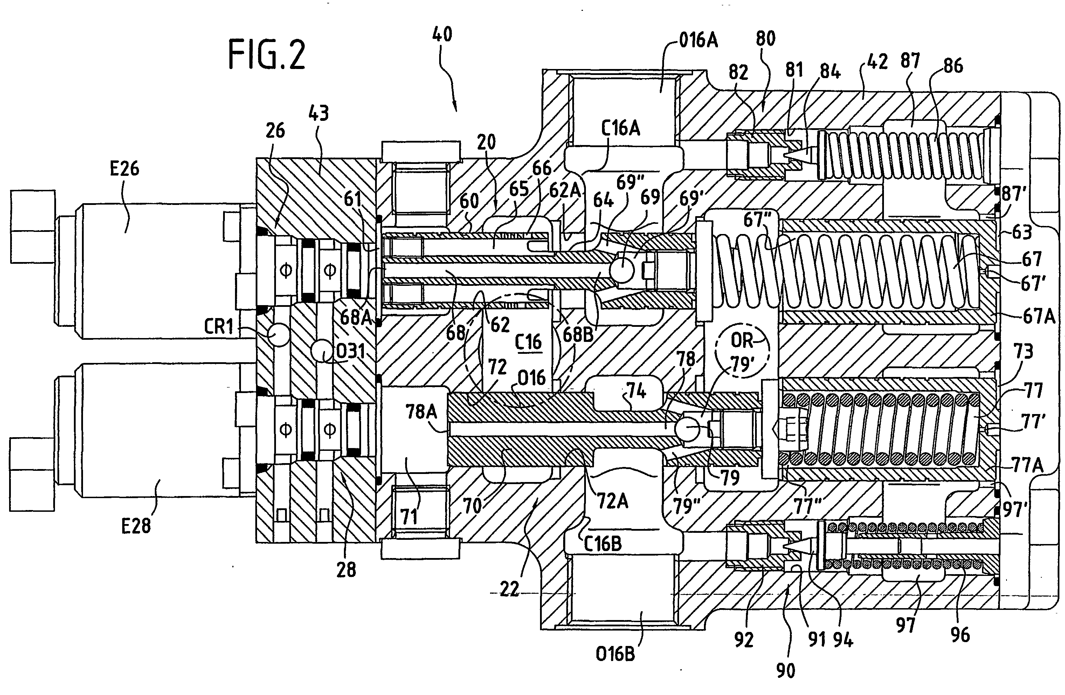

Les valves 20 et 22, de même que les électrovalves 26 et 28, sont disposées dans un même bloc 40 formant un composant hydraulique. La conformation de ce composant est détaillée sur la coupe de la figure 2.

On voit sur cette figure qu'il comporte un corps 42 ayant un orifice 016 destiné à être raccordé à la conduite principale 16 et deux orifices, respectivement O16A et O16B, respectivement destinés à être raccordés aux tronçons 16A et 16B formant les deux branches en dérivation de cette conduite. La valve 20 de contrôle du patinage comprend un tiroir 60 disposé dans un alésage 62, qui est ménagé à l'intérieur du corps 40 et auquel sont reliés les orifices O16 et O16A en deux zones de raccordement distinctes, respectivement par des conduits C16 et C16A.

Selon la position du tiroir 60, la périphérie externe de ce dernier coopère avec une portion 62A de la paroi de cet alésage qui est disposé entre lesdites zones de raccordement, de manière à faire communiquer plus ou moins (avec une section de passage plus ou moins grande) les conduits C16 et C16A.

Par exemple, le tiroir 60 comporte une gorge 64 qui, dans la position représentée sur la figure 2, permet une communication sensiblement libre entre les conduits C16 et C16A. On relèvera toutefois que, même dans cette situation, la présence du tiroir dans le passage délimité par la portion 62A de la paroi de l'alésage 62 diminue localement la section de passage du fluide, par rapport à une situation dans laquelle ce passage sera totalement dégagé. Il en résulte donc une perte de charge.

La valve 20 est une valve progressive. En effet, un conduit 65 est ménagé dans le tiroir 60 et communique, d'une part, avec la gorge 64 et, d'autre part, avec une série d'orifices 66 qui s'ouvrent sur la paroi axiale du tiroir 60. Ces orifices ont avantageusement des tailles différentes et on comprend que, lorsqu'ils sont plus ou moins masqués par la portion 62A de l'alésage 60, la section de passage entre le conduit C16 et le conduit C16A est plus ou moins réduite.

La portion 62A de l'alésage 60 constitue donc un conduit de communication entre les conduits C16 et C16A, sur lequel est disposée la restriction de la valve 20 et qui est apte à raccorder ces conduits C16 et C16A selon une section de passage variable en fonction de la position du tiroir dans son alésage.

La valve supplémentaire 22 comprend un tiroir 70 qui est disposé dans un alésage 72 lui-même relié, en deux zones distinctes, à l'orifice O16 d'une part et à l'orifice O16B d'autre part, respectivement par les conduits C16 et C16B. La périphérie du tiroir 72 comprend une gorge 74 qui, lorsqu'elle est en regard d'une portion 72A de l'alésage 72, permet le raccordement sensiblement libre entre les conduits C16 et C16B tandis que, lorsque la périphérie des tiroirs coopère avec cette portion 72A, cette communication n'est plus possible.

Dans la situation de la figure 2, la valve de contrôle du patinage 20 est représentée dans sa première position extrême, tandis que la valve supplémentaire 22 est représentée dans sa deuxième position extrême.

Les tiroirs 60 et 70 des valves 20 et 22 sont déplacés entre leurs différentes positions par des électrovalves 26 et 28, montées dans un corps 43 rapporté sur le corps 42 ou formant une pièce avec celui-ci. Ces électrovalves sont elles-mêmes commandées par des commandes électriques E26 et E28 reliées aux lignes LC20 et LC22 évoquées précédemment. Le corps 43 présente un orifice O31 apte à être raccordé à la conduite de gavage 31. Cet orifice communique avec les alésages des tiroirs des valves 26 et 28 (représentés schématiquement en vue extérieure) pour former leurs premières voies respectives, tandis que leurs deuxièmes voies sont aptes à être raccordées à un réservoir sans pression par un conduit de raccordement CR1 qui est relié par un conduit (non représenté) à un orifice OR du corps 42 qui forme un orifice de retour de fuites, relié à un réservoir sans pression. La troisième voie de la valve 26 est reliée à la chambre de commande 61 de la valve 20, tandis que la troisième voie de la valve 28 est reliée à la chambre de commande 71 de la valve 22. Sur la figure 2, la chambre de commande 61 est raccordée au réservoir sans pression, tandis que la chambre de commande 71 est raccordée au gavage pour être alimentée en fluide et solliciter le tiroir 70 dans sa deuxième position.

Des moyens de rappel élastique, respectivement des ressorts 67 et 77, coopèrent avec des extrémités des tiroirs 60 et 70 opposées aux chambres de commande 61 et 71 pour solliciter ces tiroirs en permanence vers leurs premières positions respectives.

La valve 20 comporte, en outre, un conduit anti-cavitation qui permet le raccordement de la conduite principale sur laquelle cette valve est disposée avec la conduite de gavage 31 afin d'éviter des phénomènes de cavitation lorsque cette conduite principale cesse d'être alimentée par la pompe principale 14 du circuit.

Le conduit anti-cavitation 68 est raccordé, d'une part, au conduit C16A et, d'autre part, à la chambre de commande 61. Dans l'exemple représenté, le conduit anti-cavitation 68 est formé par un perçage axial du tiroir 60 dont une première extrémité 68A est située à l'extrémité du tiroir à laquelle est formée la chambre de commande 61 et une deuxième extrémité 68B est formée dans une portion du tiroir qui est apte à communiquer avec l'orifice O16A quelle que soit la position de ce tiroir.

Un clapet anti-retour est formé dans le conduit anti-cavitation de manière à permettre seulement la circulation de fluide dans le sens allant de la chambre de commande 61 vers l'orifice O16A. Par exemple, la deuxième extrémité 68B du perçage axial précité forme un siège pour une bille 69 située dans une cavité 69' qui communique avec la gorge 64 par une ou plusieurs portions de conduits 69". Du côté opposé au conduit 68, la cavité 69' est fermée par un bouchon vissé à l'extrémité du tiroir avec laquelle coopèrent les moyens de rappel élastiques 67 précités.

Avantageusement, un système anti-cavitation analogue est prévu dans la valve 22. On voit en effet que le tiroir de cette dernière comporte un conduit anti-cavitation 78 qui s'étend d'une première extrémité 78A en communication avec la chambre de commande 71 à une deuxième extrémité 78B formant un siège pour la bille 79 d'un clapet anti-retour, cette bille étant disposée dans une cavité 79' qui communique avec la gorge 74 par un ou plusieurs conduits 79". Ce conduit permet d'éviter la cavitation en reliant le conduit C16B au conduit de gavage 31.

Dans l'exemple représenté, l'orifice O16, d'une part, et les orifices O16A et O16B, d'autre part, sont reliés à la même conduite principale 16, respectivement en amont et en aval de la valve. Le noeud N1 formant la dérivation de la conduite 16 entre les conduites 16A et 16B se trouve à l'intérieur du corps 40. Le noeud N2 est disposé à l'extérieur pour la clarté du dessin, mais il pourrait être intégré dans cette valve.

De manière générale, le corps de valve 42 comporte au moins un premier orifice et un deuxième orifice destinés à être reliés à une conduite principale, respectivement en amont et en aval de l'ensemble formé par la valve de contrôle de patinage et par la valve supplémentaire.

Avantageusement, au moins une soupape destinée à limiter la pression dans la conduite principale à laquelle sont destinés à être reliés ces orifices est disposée dans le corps 42. Dans l'exemple représenté, une soupape de ce type est prévue pour chacune des deux branches de dérivation 16A et 16B, ces soupapes étant respectivement associées à la valve 20 et à la valve 22 ou 122.

Ainsi, la soupape 80 formée dans le corps 42 comporte un alésage 81 s'étendant entre le premier conduit C16A et un conduit de raccordement au réservoir sans pression comprenant la chambre 87, le passage 87', la restriction 67' formée dans le support 67A du ressort 67 et la chambre 67" de ce ressort qui est reliée en permanence à l'orifice de retour OR. Dans cet alésage 81 est disposée une restriction calibrée 82, formant un passage de section réduite pour le fluide. Cette restriction est normalement obturée par un pointeau 84 qui est rappelé en permanence en position d'obturation par des moyens de rappel élastique 86.

Une soupape 90 analogue est reliée au conduit C16B, puisqu'un alésage 91 s'étendant entre ce conduit et un conduit de raccordement au réservoir sans pression contient une restriction 92 normalement obturée par un pointeau 94 rappelé en permanence en position d'obturation par des moyens de rappel élastique 96.

Pour cette soupape, le conduit de raccordement au réservoir sans pression est formé par la chambre 97, le passage 97', la restriction 77' ménagée dans le support 77A du ressort 77 et la chambre 77" dans laquelle se trouve ce ressort, cette chambre étant raccordée en permanence à l'orifice de retour OR et étant séparée d'une chambre 63 par la restriction.

La soupape 90 est normalement sollicitée lorsque, la valve 22 ou 122, étant dans sa deuxième position ou au voisinage de cette-ci, elle occasionne entre les orifices O16 et O16B, une perte de charge importante qui cause une surpression en O16B. Dans ce cas, cette surpression repousse le pointeau 94 dans le sens de l'ouverture de la soupape, ce qui génère une pression de fluide dans la chambre 97. Par le passage 97', cette pression s'exerce sur le support 77A du ressort 77 grâce à la restriction 77', qui empêche le libre passage du fluide de la chambre 73 à la chambre 77", ces deux chambres étant ménagées de part et d'autre du support du ressort 77A.

Il en résulte que ce support 77A et le ressort 77 se déplacent (vers la gauche) en sollicitant le déplacement du tiroir 70 ou 170 vers sa première position, ce qui a pour effet d'ouvrir le passage entre l'orifice O16B et le conduit C16, de sorte que l'excès de pression en O16B se déverse dans ce conduit. Selon le diamètre de la restriction 77', une petite partie du fluide en excès s'est directement écoulée vers l'orifice OR, par la chambre 77". Ce raccord à l'orifice OR par la restriction 77' permet la vidange de la chambre 73 pour favoriser, lorsque la soupape 90 se referme, le retour du tiroir 70 dans sa deuxième position.

Le fonctionnement de la soupape 80 est analogue, dans le cas d'une surpression dans le conduit C16A.

Les chambres 63 et 73 sont des chambres de commande inverses, d'effet opposé à celui des chambres 61 et 71. En effet, par l'ouverture des soupapes 80 et 90 respectivement, les chambres 63 et 73 sont aptes à être alimentées en fluide pour solliciter le déplacement des tiroirs 60 et 70 vers leurs premières positions extrêmes respectives, tandis que l'alimentation en fluide des chambres de commande 61 et 71 sollicite le déplacement de ces tiroirs vers leurs deuxièmes positions respectives.

La valve supplémentaire 22 ou 122 présente une conformation analogue à celle de la valve 20 (à ceci près que, selon qu'il s'agisse de la valve 22 ou de la valve 122, elle présente une restriction progressive ou non).

Les soupapes 80 et 90 sont indiquées sur la figure 1, en représentation normalisée. De même, les conduits anti-cavitation 68 et 78, ainsi que leurs clapets anti-retour 69 et 79 sont représentés sur cette figure.

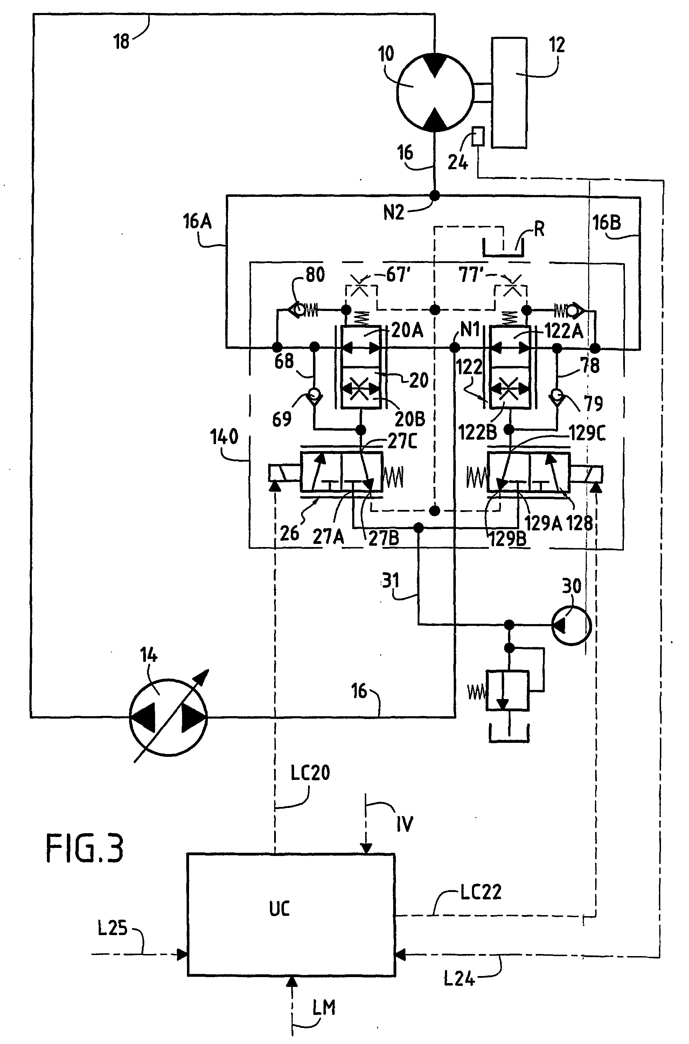

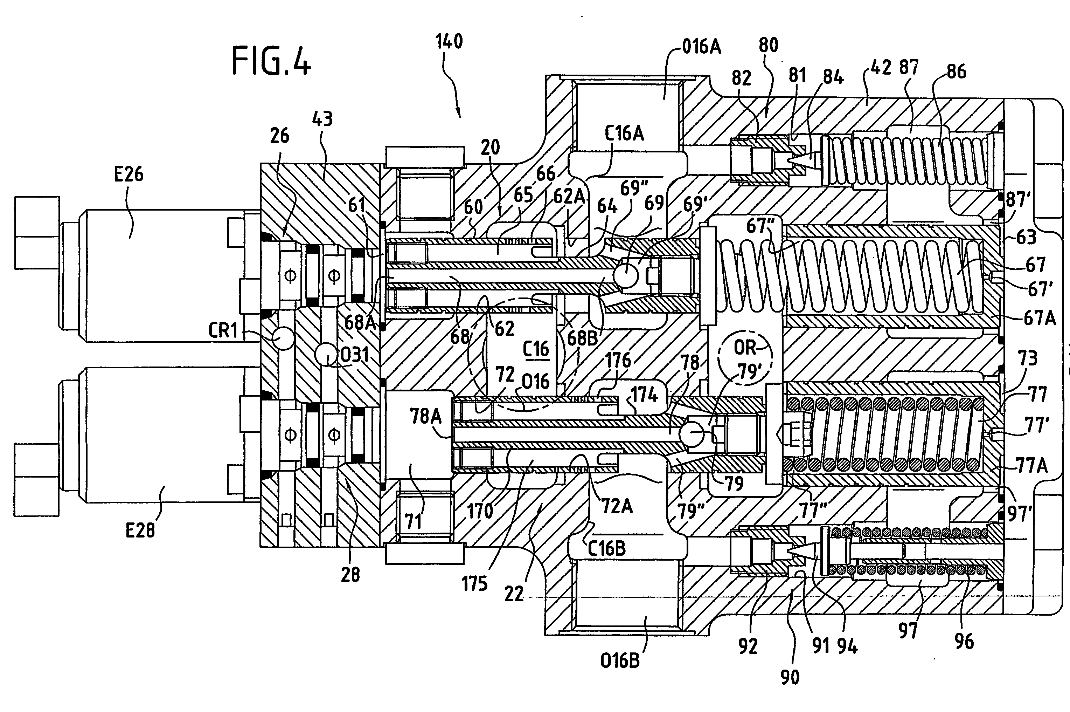

On décrit maintenant la variante des figures 3 et 4, sur lesquelles les éléments inchangés par rapport aux figures 1 et 2 ont conservé les références qu'ils avaient sur ces figures.

Sur la figure 3, la valve de contrôle de patinage 20 et sa valve de commande 26 sont inchangées par rapport à la figure 1.

En revanche, la valve supplémentaire 122 diffère de la valve supplémentaire 22 de la figure 1 en ce qu'il ne s'agit pas d'une valve à deux positions, mais d'une valve progressive dont la position peut varier entre deux positions extrêmes, respectivement 122A, dans laquelle sa section de passage est maximale et 122B, dans laquelle sa section de passage est minimale. Il est avantageux que la section de passage minimale de la valve 122 soit non nulle, pour qu'elle puisse être commandée avec souplesse, en évitant les chocs de pression.

Pour commander le déplacement progressif de cette valve, l'électrovalve de commande 128 est elle-même une valve progressive. Comme la valve 28, elle comporte toutefois trois voies, respectivement 129A, 129B et 129C raccordées respectivement à la conduite de gavage 31, à une conduite de retour de fluide et à la chambre hydraulique de commande de la valve de commande, en l'espèce la valve 122.

Sur l'exemple de la figure 3, les moyens de commande comprennent une première commande (ligne de commande LC20, électrovalve 26) pour la valve de contrôle du patinage 20 et une deuxième commande (ligne de commande LC22 et électrovalve 128) pour la valve supplémentaire 122, ces deux valves pouvant donc être commandées séparément.

Toutefois, dans le cas où la valve supplémentaire est, comme la valve de contrôle du patinage, une valve progressive, on pourrait prévoir que les moyens de commande comprennent une commande commune pour ces deux valves, qui seraient ainsi commandées simultanément. Par exemple, les lignes LC20 et LC22 ne se séparent qu'à la sortie de l'unité de contrôle UC. On pourrait également réaliser une commande commune en n'utilisant qu'une seule électrovalve pour les valves 20 et 122.

Sur la figure 4, le composant hydraulique 140 se distingue du composant 40 de la figure 2 par la conformation du tiroir 170 de la valve supplémentaire. En effet, ce tiroir est analogue au tiroir 60 de la valve 20 puisque, comme lui, il comporte une restriction dont la section de passage (en l'espèce, entre les conduits C16 et C16B) est variable en fonction de la position du tiroir dans son alésage. Il est réalisé de la même manière que le tiroir 60, un conduit axial 175 faisant communiquer des perçages 176 pratiqués sur la paroi du tiroir avec la gorge 174 de ce tiroir, ces perçages étant plus ou moins masqués par la partie 72A de l'alésage 72. Pour le reste, le composant hydraulique 140 analogue est analogue au composant 40 et comporte en particulier les systèmes anti-cavitation et les soupapes évitant la surpression dans les conduites d'alimentation du moteur de ce dernier.

Comme indiqué sur la figure 3, l'unité de contrôle peut recevoir une information IV relative à la vitesse de translation de l'engin, mesurée par les moyens appropriés. Elle peut être programmée pour que, tant que la vitesse est inférieure à une vitesse donnée, la valve supplémentaire 122 soit maintenue dans sa deuxième position extrême (par la commande de l'électrovalve 128 dans sa position permettant l'alimentation de la chambre de commande 71 par le fluide de gavage). Dans ce cas, lorsqu'une situation de patinage est détectée, seule la valve de contrôle du patinage 20 est commandée de manière à générer une perte de charge quand cela s'avère nécessaire.

La programmation peut être telle que, lorsque la vitesse dévient supérieure à cette vitesse donnée, la valve de contrôle du patinage et la valve supplémentaire soient toutes les deux commandées pour générer une perte de charge lorsque cela est nécessaire afin de contrôler le patinage. Ainsi, lorsque la vitesse est supérieure à la vitesse donnée et qu'aucun patinage n'est détecté, les deux valves peuvent occuper leurs premières positions extrêmes dans lesquelles elles offrent chacune une section de passage maximale permettant la circulation, sans perte de charge notable, du débit de fluide nécessaire à l'obtention des vitesses élevées.

On peut choisir que les restrictions de la valve de contrôle du patinage 20 et de la valve supplémentaire 122 présentent la même loi de variation de section (tiroirs 60 et 170 identiques et ressorts 67 et 77 identiques).

On peut préférer choisir de faire en sorte que les restrictions de la valve de contrôle du patinage 20 et de la valve supplémentaire 122 présentent des lois de variation de sections différentes, en fonction de l'application considérée.

Les électrovalves 26 et 128 peuvent être constituées par un réducteur de pression proportionnel électro-hydraulique ou par un limiteur de pression proportionnel électro-hydraulique, de manière à obtenir une commande proportionnelle au signal émis par l'unité de contrôle UC pour effectuer le réglage souhaité des restrictions 66 et 176.

L'électrovalve 28 peut être analogue aux électrovalves 26 et 128, ou bien être une simple électrovanne à deux positions.

Grâce à la ligne LM, l'unité de contrôle UC reçoit une information quant au mode d'activation ou de désactivation du contrôle du patinage. Dans la variante des figures 1 et 2, l'activation du mode de contrôle du patinage conduit l'unité de contrôle UC à placer la valve supplémentaire 22 dans sa deuxième position extrême. Avantageusement, cette activation conduit également l'unité UC à placer la valve 20 dans une position d'attente intermédiaire entre ses deux positions extrêmes 20A et 20B, dans laquelle la section de passage de sa restriction est légèrement inférieure à la section maximale et supérieure à sa section minimale. Par exemple, en position d'attente, le tiroir est déplacé à partir de sa première position extrême sur environ ¼ de sa course vers sa deuxième position extrême. En cas de patinage, ceci permettra d'améliorer la réactivité du système de contrôle du patinage.

Dans la variante des figures 3 et 4, l'activation du mode de contrôle du patinage conduit avantageusement l'unité de contrôle UC à placer les valves 20 et 122 dans des positions d'attente, dans lesquelles les sections de leurs restrictions sont (légèrement) inférieures à leurs sections maximales mais supérieures à leurs sections minimales, ceci également dans le but d'augmenter la réactivité du système de contrôle du patinage.

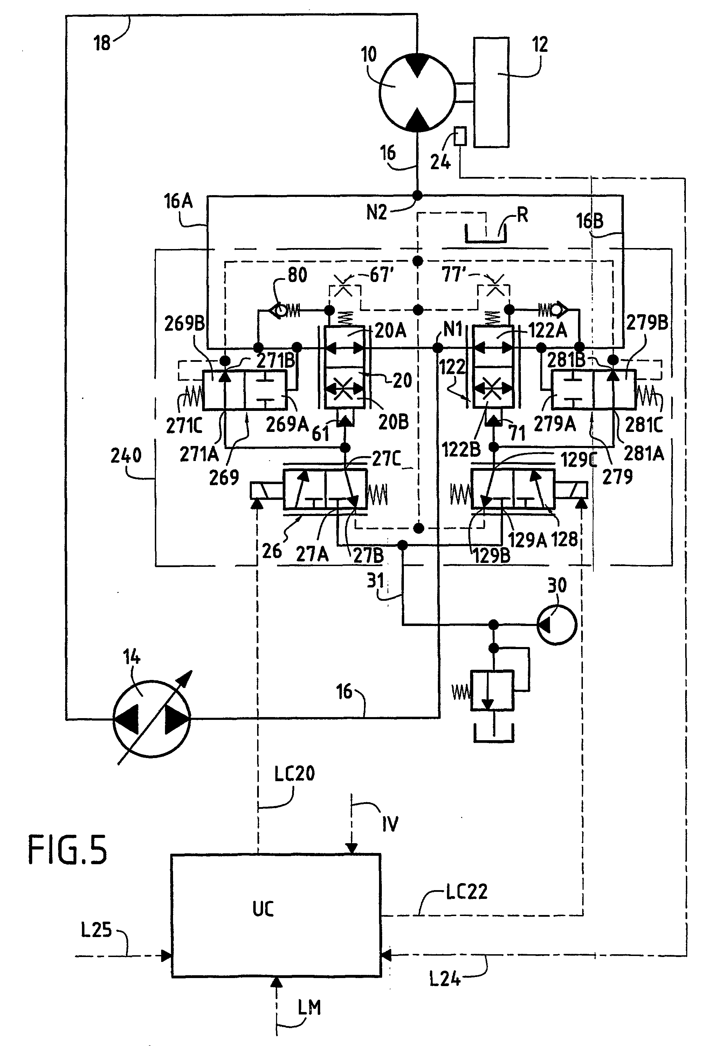

La variante de la figure 5 se rapporte aux moyens anti-cavitation du circuit. Elle est adaptable sur les variantes des figures précédentes. Les éléments de la figure 5 inchangés par rapport à la figure 3 sont désignés par les mêmes références. Avec cette variante, les moyens anti-cavitation permettent de placer la valve 20, 22 ou 122 dans sa position dans laquelle sa section de passage est maximale lorsque la pression dans la conduite principale 16 diminue jusqu'à un seuil déterminé, correspondant en général à la pression minimale de gavage. De préférence, la valve occupant naturellement cette position (sous l'effet de moyens de rappel élastique), les moyens anti-cavitation empêchent la commande de la valve en dehors de cette position.

Sur la figure 5, les clapets anti-retour 69 et 79 de la figure 3 sont remplacés par des sélecteurs à deux voies et à deux positions, 269 et 279.

Le sélecteur 269 présente une première voie 271A reliée à la chambre de commande 61 de la valve 20 et une deuxième voie 271B reliée au réservoir sans pression R. Ce sélecteur est commandé par la pression de fluide régnant dans le tronçon de conduite principale 16A contre l'effort d'un ressort 271C dont le tarage correspond à la pression minimale de gavage.

De même, les deux voies 281A et 281B du sélecteur 279 sont respectivement reliées à la chambre de commande 71 de la valve 122 et au réservoir sans pression R. Ce sélecteur est commandé par la pression de fluide dans le tronçon de conduite principale 16B contre l'effort du ressort 281C, taré à la pression de gavage.

Tant que la pression dans le tronçon de conduite principale 16A ou 16B reste supérieure à la pression minimale de gavage, le sélecteur 269 ou 279 occupe sa première position 269A ou 279A, dans laquelle il est piloté contre l'effet du ressort 271C ou 281C. Dans ce cas, la chambre de commande 61 ou 71 de la valve 20 ou 122 est isolée du réservoir R et cette valve 20 ou 122 peut donc être commandée normalement.

En revanche, lorsque la pression dans le tronçon 16A ou 16B devient inférieure à la pression de gavage, le ressort 271C ou 281C rappelle le sélecteur 269 ou 279 dans sa deuxième position 269B ou 279B, de sorte que la chambre 61 ou 71 est reliée au réservoir, ce qui empêche la commande de la valve 20 ou 122, qui reste dans sa première position 20A ou 122A. Il en résulte que le moteur est raccordé à l'orifice de la pompe relié à la conduite principale 16 par une section de raccordement maximale.

## Revendications

1. Circuit de transmission hydrostatique d'engin ayant au moins deux organes de déplacement (12) entraînés par au moins un moteur hydraulique (10) ayant une conduite principale d'alimentation et une conduite principale d'échappement (16, 18), une source de fluide sous pression (14) reliée audit moteur par la conduite principale d'alimentation et des moyens de contrôle du patinage d'au moins un organe de déplacement (12) qui comprennent une valve de contrôle du patinage (20), disposée sur l'une desdites conduites principales (16, 16A) et comportant une restriction (66) de section variable, des moyens de détection (24) d'une situation de patinage dudit organe de déplacement (12) et des moyens de commande aptes à régler la section de ladite restriction en fonction de la situation détectée,
**caractérisé en ce que** les moyens de contrôle du patinage dudit organe de déplacement comprennent, en outre, une valve supplémentaire (22 ; 122) disposée en parallèle de la valve de contrôle du patinage (20), sur une dérivation (16B) de la conduite principale (16) sur laquelle cette dernière est disposée, ladite valve supplémentaire ayant une première position extrême (22A ; 122A) dans laquelle sa section de passage est maximale et une deuxième position extrême (22B ; 122B) dans laquelle sa section de passage est minimale et étant susceptible d'être commandée entre ses positions extrêmes par les moyens de commande (UC, 26, 28 ; 128).

2. Circuit selon la revendication 1, **caractérisé en ce que** la valve supplémentaire (22) est une valve à deux positions et **en ce que** les moyens de commande (UC) sont aptes à recevoir (LM) une information d'activation ou de désactivation du contrôle du patinage et sont aptes à placer la valve supplémentaire (22) dans sa première position extrême (22A) en situation de désactivation du contrôle du patinage et dans sa deuxième position extrême (22B) en situation d'activation du contrôle du patinage.

3. Circuit selon la revendication 1, **caractérisé en ce que** la valve supplémentaire (122) comporte une restriction (176) de section variable, et **en ce que** les moyens de commande (UC, 26, 128) sont aptes à régler la section de cette restriction en fonction de la situation de patinage détectée par les moyens de détection (24).

4. Circuit selon l'une quelconque des revendications 1 à 3, **caractérisé en ce que** les moyens de commande (UC, 26, 28 128) comprennent une première commande (LC20, 26) pour la valve de contrôle du patinage (20) et une deuxième commande (LC22, 28; 128) pour la valve supplémentaire (22 ; 122), les deux valves étant ainsi commandées séparément.

5. Circuit selon la revendication 1 ou 3, **caractérisé en ce que** les moyens de commande (UC, 26, 28 ; 128) comprennent une commande commune pour la valve de contrôle du patinage (20) et pour la valve supplémentaire (122), les deux valves étant ainsi commandées simultanément.

6. Circuit selon l'une quelconque des revendications 3 et 4, **caractérisé en ce qu'**il comporte des moyens pour mesurer la vitesse de translation de l'engin (IV) et **en ce que**, tant que la vitesse est inférieure à une vitesse donnée, les moyens de commande (UC, 26, 128) maintiennent la valve supplémentaire (122) dans sa deuxième position extrême (122B) et règlent la section de la restriction de la valve de contrôle du patinage (20) en fonction de la situation de patinage détectée, tandis que, lorsque la vitesse est supérieure à ladite vitesse donnée, les moyens de commande (UC, 26, 128) règlent les sections des restrictions de la valve de contrôle du patinage et de la valve supplémentaire en fonction de la situation de patinage détectée.

7. Circuit selon l'une quelconque des revendications 3 à 6, **caractérisé en ce que** les restrictions (66 ; 176) de la valve de contrôle du patinage (20) et de la valve supplémentaire (122) présentent la même loi de variation de section.

8. Circuit selon l'une quelconque des revendications 3 à 6, **caractérisé en ce que** les restrictions (66 ; 176) de la valve de contrôle du patinage (20) et de la valve supplémentaire (122) présentent des lois de variation de section différentes.

9. Circuit selon l'une quelconque des revendications 1 à 8, **caractérisé en ce que** les moyens de commande (UC) sont aptes à recevoir (LM) une information d'activation ou de désactivation du contrôle du patinage et sont aptes, dans le cas d'une activation du contrôle du patinage, à placer la valve de contrôle du patinage (20) dans une situation d'attente dans laquelle la section de la restriction (65) de ladite valve est inférieure à la section maximale de ladite restriction, mais supérieure à sa section minimale.

10. Circuit selon l'une quelconque des revendications 1 à 9, **caractérisé en ce que** la valve (20) de contrôle du patinage comprend un tiroir (60) mobile en translation dans un alésage (62) relié, en deux zones distinctes, à un premier conduit (C16A) raccordé à une conduite principale (16) du moteur (10) et à un deuxième conduit (C16) raccordé à une conduite d'alimentation en fluide provenant de la source de fluide (14) sous pression ou à une conduite d'évacuation de fluide, et **en ce que** la valve présente un conduit de communication (62A, 64), sur lequel est disposée la restriction (66) de ladite valve et qui est apte à raccorder lesdits premier et deuxième conduits (C16A, C16) selon une section de passage variable en fonction de la position du tiroir (60) dans l'alésage (62).

11. Circuit selon la revendication 10, **caractérisé en ce que** la valve (20) de contrôle du patinage comporte, en outre, un conduit anti-cavitation (68), qui est raccordé, d'une part, audit premier conduit (C16A) et, d'autre part, à une chambre de commande du déplacement du tiroir (61), elle-même susceptible d'être reliée à une source auxiliaire de fluide (30) et qui comporte un clapet anti-retour (69) apte à permettre seulement la circulation de fluide dans le sens allant de ladite chambre de commande vers le premier conduit.

12. Circuit selon l'une quelconque des revendications 1 à 11, **caractérisé en ce que** la valve de contrôle du patinage (20) et la valve supplémentaire (22 ; 122) sont disposées dans un même bloc (40 ; 140), qui forme un composant hydraulique et qui comporte un corps (42) présentant au moins deux orifices (C16 ; C16A,C16B) destinés à être reliés à une conduite principale (16), respectivement en amont et en aval de l'ensemble formé par la valve de contrôle du patinage et par la valve supplémentaire.

13. Circuit selon la revendication 12, **caractérisé en ce qu'**au moins une soupape (80, 90) destinée à limiter la pression dans la conduite principale (16) à laquelle sont destinés à être reliés lesdits orifices est disposée dans le corps (42).

14. Circuit selon les revendications 10, 12 et 13 ou 11, 12 et 13, **caractérisé en ce qu'**il comporte une soupape (80) associée à la valve de contrôle du patinage (20), **en ce que** cette soupape (80) est apte à relier le premier conduit (C16A) à une chambre de commande inverse (63), apte à être alimentée en fluide par l'ouverture de ladite soupape pour solliciter le déplacement du tiroir (60) vers sa première position extrême, tandis que l'alimentation en fluide de la chambre de commande (61) sollicite le déplacement de ce tiroir vers sa deuxième position extrême.

15. Circuit selon la revendication 14, **caractérisé en ce que** la valve supplémentaire (22, 122) présente une conformation analogue à celle de la valve (20) de contrôle du patinage, et est associée à une soupape (90) de fonctionnement analogue à celui de la soupape (80) qui est associée à ladite valve (20).

16. Circuit selon l'une quelconque des revendications 1 à 10 et 12 à 15, **caractérisé en ce qu'**il comporte des moyens anti-cavitation (269, 279) aptes à placer au moins l'une des valves que constituent la valve de contrôle du patinage (20) et la valve supplémentaire (22 ; 122) dans sa position dans laquelle sa section de passage est maximale lorsque la pression dans la conduite principale (16) diminue jusqu'à un seuil déterminé.

## Claims

1. A hydrostatic transmission circuit for a vehicle having at least two displacement members (12) driven by at least one hydraulic motor (10) having a feed main duct and a discharge main duct (16, 18), a pressurized fluid source (14) connected to said motor via the feed main duct, and skid control means for controlling skidding of at least one displacement member (12), which means comprise a skid control valve (20) disposed on one of said main ducts (16, 16A) and having a constriction (66) of variable section, detection means (24) for detecting a situation in which said displacement member (12) is skidding, and control means suitable for adjusting the section of said constriction as a function of the detected situation;
said hydrostatic transmission circuit being **characterised in that** the skid control means for controlling skidding of said displacement member further comprise an additional valve (22; 122) disposed in parallel with the skid control valve (20), on a branch (16B) of the main duct (16) on which said skid control valve is disposed, said additional valve having a first end position (22A; 122A) in which its through section is at its maximum and a second end position (22B; 122B) in which its through section is at its minimum, and being suitable for being caused to move between its end positions by the control means (UC, 26, 28; 128).

2. A circuit according to claim 1, **characterised in that** the additional valve (22) is a two-position valve, and **in that** the control means (UC) are suitable for receiving (LM) information for activating or deactivating the skid control, and are suitable for placing the additional valve (22) in its first end position (22A) in a skid control deactivated situation, and in its second end position (22B) in a skid control activated situation.

3. A circuit according to claim 1, **characterised in that** the additional valve (122) has a constriction (176) of variable section, and **in that** the control means (UC, 26, 128) are suitable for adjusting the section of said constriction as a function of the skid situation detected by the detection means (24).

4. A circuit according to any one of claims 1 to 3, **characterised in that** the control means (UC, 26, 28; 128) comprise a first control (LC20, 26) for the skid control valve (20) and a second control (LC22, 28; 128) for the additional valve (22; 122), the two valves thus being controlled separately.

5. A circuit according to claim 1 or claim 3, **characterised in that** the control means (UC, 26, 28; 128) comprise a common control for the skid control valve (20) and for the additional valve (122), the two valves thus being controlled simultaneously.

6. A circuit according to claim 3 or claim 4, **characterised in that** it comprises means for measuring the travel speed of the vehicle (IV) and **in that**, so long as its speed is lower than a given speed, the control means (UC, 26, 128) hold the additional valve (122) in its second end position (122B) and adjust the section of the constriction of the skid control valve (20) as a function of the skid situation detected, while, when the speed is higher than said given speed, the control means (UC, 26, 128) adjust the sections of the constrictions of the skid control valve and of the additional valve as a function of the skid situation detected.

7. A circuit according to any one of claims 3 to 6, **characterised in that** the constrictions (66; 176) of the skid control valve (20) and of the additional valve (122) have the same section variation relationship.

8. A circuit according to any one of claims 3 to 6, **characterised in that** the constrictions (66; 176) of the skid control valve (20) and of the additional valve (122) have different section variation relationships.

9. A circuit according to any one of claims 1 to 8, **characterised in that** the control means (UC) are suitable for receiving (LM) information for activating or deactivating the skid control, and are suitable, when the skid control is activated, for placing the skid control valve (20) in a standby situation in which the section of the constriction (65) of said valve is smaller than the maximum section of said constriction, but larger than its minimum section.

10. A circuit according to any one of claims 1 to 9, **characterised in that** the skid control valve (20) has a slide (60) mounted to move in translation in a bore (62) connected at two distinct zones to a first duct (C16A) connected to a main duct (16) of the motor (10) and to a second duct (C16) connected to a fluid feed duct for feeding fluid from the pressurized fluid source (14), or to a fluid discharge duct, and **in that** the valve has a communication duct (62A, 64) on which the constriction (66) of said valve is disposed, and which is suitable for connecting said first and second ducts (C16A, C16) via a through section which is variable as a function of the position of the slide (60) in the bore (62).

11. A circuit according to claim 10, **characterised in that** the skid control valve (20) further has an anti-cavitation duct (68) which is connected firstly to said first duct (C16A) and secondly to a control chamber for causing the slide (61) to move, which chamber is itself suitable for being connected to an auxiliary fluid source (30), said anti-cavitation duct being provided with a check valve (69) suitable for enabling fluid to flow only in the direction going from said control chamber towards the first duct.

12. A circuit according to any one of claims 1 to 11, **characterised in that** the skid control valve (20) and the additional valve (22; 122) are disposed in the same unit (40; 140), which forms a hydraulic component and which has a body (42) provided with at least two orifices (C16; C16A, C16B) for connection to a main duct (16), respectively upstream and downstream from the assembly formed by the skid control valve and by the additional valve.

13. A circuit according to claim 12, **characterised in that** at least one valve (80, 90) serving to limit the pressure in the main duct (16) to which said orifices are to be connected is disposed in the body (42).

14. A circuit according to claims 10, 12, and 13 or 11, 12, and 13, **characterised in that** it is provided with a valve (80) associated with the skid control valve (20), **in that** said associated valve (80) is suitable for connecting the first duct (C16A) to an inverse control chamber (63) suitable for being fed with fluid by opening said valve in order to urge the slide (60) to move towards its first end position, while feeding the control chamber (61) with fluid urges said slide to be moved towards its second end position.

15. A circuit according to claim 14, **characterised in that** the additional valve (22, 122) has a shape analogous to the shape of the skid control valve (20), and is associated with a valve (90) operating analogously to the valve (80) which is associated with said valve (20).

16. A circuit according to any one of claims 1 to 10 and 12 to 15, **characterised in that** it comprises anti-cavitation means (269, 279) suitable for placing at least one of the valves that constitute the skid control valve (20) and the additional valve (22; 122) in its position in which its through section is at its maximum when the pressure in the main duct (16) decreases to a determined threshold.

## Patentansprüche

1. Schaltung für hydrostatische Fahrzeuggetriebe, umfassend mindestens zwei Verstellorgane (12), die von mindestens einem Hydromotor (10) angetrieben werden, der eine Hauptzuführungsleitung und eine Hauptausströmleitung (16, 18) aufweist, eine Druckflüssigkeit (14), die durch die Hauptzuführungsleitung mit diesem Motor verbunden ist, und Mittel zur Gleitregelung mindestens eines Verstellorgans (12), die ein Gleitregelventil (20) umfassen, das in einer dieser Hauptleitungen (16, 16A) angeordnet ist und eine Sperre (66) mit variablem Querschnitt umfaßt, Mittel zur Erkennung (24) eines Gleitzustands dieses Verstellorgans (12) und Steuermittel, die geeignet sind, den Querschnitt dieser Sperre abhängig vom erkannten Zustand zu regeln,
**dadurch gekennzeichnet,**
**daß** die Mittel zur Gleitregelung dieses Verstellorgans außerdem ein Zusatzventil (22; 122) umfassen, das parallel zum Gleitregelventil (20) in einer Zweigleitung (16B) derjenigen Hauptleitung (16) angeordnet ist, in welcher dieses letztere angeordnet ist, wobei dieses Zusatzventil eine erste Endstellung (22A; 122A) aufweist, in welcher sein Durchgangsquerschnitt maximal ist, und eine zweite Endstellung (22B; 122B), in welcher sein Durchgangsquerschnitt minimal ist, und wobei es von den Steuermitteln (UC, 26, 28; 128) zwischen seinen Endstellungen gesteuert werden kann.

2. Schaltung nach Anspruch 1, **dadurch gekennzeichnet, daß** das Zusatzventil (22) ein Zweistellungsventil ist, und dadurch, daß die Steuermittel (UC) geeignet sind, eine Aktivierungs- oder Deaktivierungsinformation (LM) der Gleitregelung zu empfangen, und geeignet sind, das Zusatzventil (22) im deaktivierten Zustand der Gleitregelung in seine erste Endstellung (22A) und im aktivierten Zustand der Gleitregelung in seine zweite Endstellung (22B) zu stellen.

3. Schaltung nach Anspruch 1, **dadurch gekennzeichnet, daß** das Zusatzventil (122) eine Sperre (176) mit variablem Querschnitt aufweist, und dadurch, daß die Steuermittel (UC, 26, 128) geeignet sind, den Querschnitt dieser Sperre abhängig vom Gleitzustand zu regeln, der von den Erkennungsmittein (24) erkannt wird.

4. Schaltung nach einem der Ansprüche 1 bis 3, **dadurch gekennzeichnet, daß** die Steuermittel (UC, 26, 28; 128) eine erste Steuerung (LC20, 26) für das Gleitregelventil (20) und eine zweite Steuerung (LC22, 28; 128) für das Zusatzventil (22; 122) umfassen, wobei die beiden Ventile getrennt gesteuert werden.

5. Schaltung nach einem der Ansprüche 1 oder 3, **dadurch gekennzeichnet, daß** die Steuermittel (UC, 26, 28; 128) eine gemeinsame Steuerung für das Gleitregelventil (20) und für das Zusatzventil (122) umfassen, wobei die beiden Ventile gleichzeitig gesteuert werden.

6. Schaltung nach einem der Ansprüche 3 und 4, **dadurch gekennzeichnet, daß** sie Mittel umfaßt, um die translatorische Geschwindigkeit des Gerätes (IV) zu messen, und dadurch, daß die Steuermittel (UC, 26, 128) das Zusatzventil (122) in seine zweite Endstellung (122B) halten und den Querschnitt der Sperre des Gleitregelventils (20) abhängig vom erkannten Gleitzustand regeln, solange die Geschwindigkeit kleiner als eine bestimmte Geschwindigkeit ist, während die Steuermittel (UC, 26, 128) die Querschnitte der Sperren des Gleitregelventils und des Zusatzventils abhängig vom erkannten Gleitzustand regeln, wenn die Geschwindigkeit größer als diese bestimmte Geschwindigkeit ist.

7. Schaltung nach einem der Ansprüche 3 bis 6, **dadurch gekennzeichnet, daß** die Sperren (66; 176) des Gleitregelventils (20) und des Zusatzventils (122) dasselbe Querschnittsänderungsgesetz aufweisen.

8. Schaltung nach einem der Ansprüche 3 bis 6, **dadurch gekennzeichnet, daß** die Sperren (66; 176) des Gleitregelventils (20) und des Zusatzventils (122) verschiedene Querschnittsänderungsgesetze aufweisen.

9. Schaltung nach einem der Ansprüche 1 bis 8, **dadurch gekennzeichnet, daß** die Steuermittel (UC) geeignet sind, eine Aktivierungs- oder Deaktivierungsinformation (LM) der Gleitregelung zu empfangen, und geeignet sind, bei einer Aktivierung der Gleitregelung das Gleitregelventil (20) in einen Bereitschaftszustand zu versetzen, in dem der Querschnitt der Sperre (65) dieses Ventils kleiner als der Höchstquerschnitt dieser Sperre ist, aber größer als sein Mindestquerschnitt.

10. Schaltung nach einem der Ansprüche 1 bis 9, **dadurch gekennzeichnet, daß** das Gleitregelventil (20) einen Schieber (60) umfaßt, der in einer Bohrung (62) parallel beweglich ist, die in zwei getrennten Zonen mit einer ersten Leitung (C16A) verbunden ist, die mit einer Hauptleitung (16) des Motors (10) verbunden ist, und mit einer zweiten Leitung (C16), die mit einer Zuführungsleitung einer Flüssigkeit verbunden ist, die von der Quelle der Druckflüssigkeit (14) kommt, oder mit einer Flüssigkeitsausströmleitung, und dadurch, daß das Ventil eine Verbindungsleitung (62A, 64) aufweist, in welcher die Sperre (66) dieses Ventils angeordnet ist, und die geeignet ist, die erste und die zweite Leitung (C16A, C16) mit einem Durchgangsquerschnitt zu verbinden, der je nach Position des Schiebers (60) in der Bohrung (62) variabel ist.

11. Schaltung nach einem der Ansprüche 10, **dadurch gekennzeichnet, daß** das Gleitregelventil (20) außerdem eine Antikavitationsleitung (68) umfaßt, die einerseits mit der ersten Leitung (C16A) verbunden ist, und andererseits mit einer Kammer (61) zum Steuern der Bewegung des Schiebers, die ihrerseits mit einer Flüssigkeitshilfsquelle (30) verbunden werden kann, und die außerdem ein Rückschlagventil (69) umfaßt, das geeignet ist, den Flüssigkeitsumlauf nur in der Richtung von dieser Steuerkammer zur ersten Leitung hin zuzulassen.

12. Schaltung nach einem der Ansprüche 1 bis 11, **dadurch gekennzeichnet, daß** das Gleitregelventil (20) und das Zusatzventil (22; 122) im einem gleichen Block (40; 140) angeordnet sind, der ein hydraulisches Bauelement formt, und der einen Körper (42) umfaßt, der mindestens zwei Öffnungen (C16; C16A, C16B) aufweist, die vorgesehen sind, um jeweils vor und hinter der Baugruppe, die durch das Gleitregelventil und das Zusatzventil gebildet wird, mit einer Hauptleitung (16) verbunden zu werden.

13. Schaltung nach Anspruch 12, **dadurch gekennzeichnet, daß** im Körper (42) mindestens ein Ventil (80, 90) angeordnet ist, das vorgesehen ist, um den Druck in der Hauptleitung (16) zu begrenzen, mit welcher die Öffnungen verbunden werden.

14. Schaltung nach den Ansprüchen 10, 12 und 13 oder 11, 12 und 13, **dadurch gekennzeichnet, daß** sie ein Ventil (80) umfaßt, daß zum Gleitregelventil (20) gehört, dadurch, daß dieses Ventil (80) geeignet ist, die erste Leitung (C16A) mit einer Umkehrsteuerkammer (63) zu verbinden, die durch die Öffnung dieses Ventils mit Flüssigkeit versorgt werden kann, um die Verschiebung des Schiebers (60) zu seiner ersten Endstellung hin zu bewirken, während die Flüssigkeitsversorgung der Steuerkammer (61) die Verschiebung dieses Schiebers zu seiner zweiten Endstellung hin bewirkt.

15. Schaltung nach Anspruch 14, **dadurch gekennzeichnet, daß** das Zusatzventil (22, 122) einen Aufbau aufweist, der dem des Gleitregelventils (20) entspricht, und zu dem ein Ventil (90) gehört, dessen Funktion der des Ventils (80) entspricht, das zum Ventil (20) gehört.

16. Schaltung nach einem der Ansprüche 1 bis 10 und 12 bis 15, **dadurch gekennzeichnet, daß** sie Antikavitationsmittel (269, 279) umfaßt, die geeignet sind, mindestens eines der Ventile, zu denen das Gleitregelventil (20) und das Zusatzventil (22; 122) gehört, in seine Position zu stellen, in welcher sein Durchgangsquerschnitt maximal ist, wenn der Druck in der Hauptleitung (16) bis auf eine vorgegebene Schwelle abfällt.
